# EUROPÄISCHE PATENTANMELDUNG

(11) **EP 1 005 184 A2**
(43) Veröffentlichungstag der Anmeldung: **31.05.2000**
(21) Anmeldenummer: 99123098.8
(22) Anmeldetag: 22.11.1999
(51) Int. Cl.: H04B 17/00, H04Q 7/36

(54) **Verfahren und Vorrichtung zum Ermitteln von gestörten und/oder belegten Frequenzkanälen in einem Mobilfunknetz**

(30) Priorität: 24.11.1998 DE 19854177
(71) Anmelder: WAVETEK GMBH, 85737 Ismaning (DE)
(72) Erfinder: Kaindl, Rolf, 85354 Freising (DE)
(74) Vertreter: Neumeister, Kurt Gustav

(57) **Zusammenfassung**

Das erfindungsgemäße Verfahren bzw. Vorrichtung dient zum Ermitteln von gestörten oder belegten Frequenz-Kanälen eines Mobilfunknetzes, bei dem nach Einbuchen eines Mobiltelefons auf eine Testeinrichtung Meßreport-Parameter zwischen dem Mobiltelefon und der Testeinrichtung in zu messenden Frequenz-Kanälen detektiert und ausgewertet werden. Dabei wird für die zu messenden Kanäle ein Meßreport-Parameter selektiert, der selektierte Meßreport-Parameter jeweils kanalweise in den zu messenden Kanälen bei geeignetem Hochfrequenz-HF-Pegel detektiert und in einer Vergleichsprozedur (3) mit einem Schwellwert verglichen, wobei bei signifikanter Abweichung des Meßreport-Parameters von dem Schwellwert der gemessene Kanal und der detektierte Meßreport-Parameter oder dessen Abweichung jeweils gespeichert (4) wird. Die gespeicherten Meßreport-Parameter werden als Funktion der gemessenen Kanäle dargestellt.

## Beschreibung

Die vorliegende Erfindung betrifft ein Verfahren zum Ermitteln von gestörten oder belegten Frequenz-Kanälen eines Mobilfunknetzes, bei dem nach Einbuchen eines Mobiltelefons auf eine Testeinrichtung Meßreport-Parameter zwischen dem Mobiltelefon und der Testeinrichtung in zu messenden Frequenz-Kanälen detektiert und ausgewertet werden. Ferner betrifft die vorliegende Erfindung eine Testeinrichtung, insbesondere zur Durchführung des Verfahrens.

Um die Gerätefunktionen von Mobiltelefonen auf Einhaltung der für den Betrieb am Netz erforderlichen Spezifikationen zu überprüfen, werden üblicherweise die Mobiltelefone mittels einer Testeinrichtung getestet. Dabei werden in einzelnen Frequenzkanälen des Netzes charakteristische Hochfrequenz-HF-Parameter, sogenannte Meßreport-Parameter, des Mobiltelefons gemessen, die Aufschluß darüber geben können, ob die Gerätefunktionen des Mobiltelefons den Spezifikationen entsprechen oder ob eine Gerätefehlfunktion vorliegt. Zeitweise gestörte oder belegte Frequenzkanäle beeinflussen jedoch extern die gemessenen Meßreport-Parameter des Mobiltelefons und können somit die Meßdaten derart verfälschen, daß trotz technisch einwandfreien Zustands des Mobiltelefons die ermittelten Daten eine Gerätefehlfunktion vortäuschen. Derartige meßtechnische Artefakte sind dann erkennbar und auszuschließen, wenn zusätzlich zu der herkömmlichen Testeinrichtung Spektrum-Analysatoren eingesetzt werden, womit zeitweise gestörte oder belegte Kanäle feststellbar sind. Nachteilig bei einem derartigen Meßverfahren ist jedoch, daß Spektrum-Analysatoren sehr teuer und kompliziert zu bedienen sind und somit für kleine Service-Shops wirtschaftlich kaum tragbar sind.

Der vorliegenden Erfindung liegt daher die Aufgabe zugrunde, die Nachteile des Standes der Technik zu vermeiden, und insbesondere ein (Meß-)verfahren sowie eine Testeinrichtung zur Durchführung des Verfahrens zu schaffen, bei dem kostengünstig und weltweit gestörte oder belegte Kanäle des lokalen Funknetzes ermittelt, und mithin Meßwertverfälschungen beim Testen von Mobiltelefonen vermieden werden, ohne daß ein teurer Spektrum-Analysator eingesetzt werden muß.

Die Aufgabe wird in verfahrenstechnischer Hinsicht dadurch gelöst, daß ein Meßreport-Parameter jeweils kanalweise in den zu messenden Kanälen bei geeignetem Hochfrequenz-HF-Pegel detektiert und in einer Vergleichsprozedur mit einem Schwellwert verglichen wird, wobei bei signifikanter Abweichung des Meßreport-Parameters von dem Schwellwert der gemessene Kanal als gestört oder belegt erkannt wird.

Vorzugsweise wird ein bestimmter Meßreport-Parameter des Mobiltelefons selektiert, dessen Verhalten bezüglich eines vorgegebenen Schwellwerts in den jeweils gemessenen Kanälen Hinweise auf Störungen im entsprechenden Kanal liefert. Der Verfahrensschritt des Vergleichens zwischen dem Meßreport-Parameter und dem Schwellwert (oder Intervall) wird dabei in den zu messenden Kanälen jeweils von neuem durchgeführt. Bei auftretenden Abweichungen in den jeweiligen Kanälen wird der entsprechende Kanal, in dem eine Abweichung ermittelt wird, und der zugehörige Abweichungswert des Parameters gespeichert und ist somit abrufbar. Durch die Speicherung der von einem den ungestörten Zustand kennzeichnenden Normwert abweichenden Parameter und der zugehörigen Kanäle werden somit gestörte oder belegte Kanäle eindeutig bezeichnet, ohne daß zusätzlich ein Spektrum-Analysator eingesetzt werden muß. Artefakte aufgrund gestörter Kanäle lassen sich somit beim Testen der Gerätefunktionen von Mobiltelefonen vermeiden.

In einer bedienungsfreundlichen Variante der Erfindung wird bei signifikanter Abweichung des Meßreport-Parameters von dem Schwellwert der gemessene Kanal und/oder der detektierte Meßreport-Parameter und/oder dessen Abweichung jeweils gespeichert. Auf diese Weise ist eine Referenz und eine weitere Verwendung der durch das erfindungsgemäße Verfahren erhaltenen Information über das lokale Mobilfunknetz verfügbar.

Nach einer vorteilhaften Ausführungsform des Verfahrens werden die gespeicherten Meßreport-Parameter als Funktion der jeweils gemessenen Kanäle dargestellt, so daß anhand einer solchen spektralen Darstellung gestörte oder belegte Kanäle visuell schnell feststellbar sind.

Vorzugsweise wird für die zu messenden Kanäle ein geeigneter Meßreport-Parameter selektiert. Ein derartiger Meßreport-Parameter kann, insbesondere für ein bestimmtes Frequenzband, voreingestellt oder in Abhängigkeit von weiteren Kriterien für eine Messung festgelegt werden.

Eine vorteilhafte Weiterbildung des erfindungsgemäßen Verfahrens kann darin bestehen, daß als Schwellwert der Erwartungswert des selektierten Meßreport-Parameters in den jeweiligen Frequenz-Kanälen eingesetzt wird, da der Erwartungswert des Parameters eine bei ungestörtem Betrieb anzutreffende Mittelwertgröße darstellt.

Eine besonders bevorzugte Verfahrensvariante sieht vor, daß als Meßreport-Parameter ein die Bitfehlerrate erfassender Parameter selektiert wird. Dabei wird in GSM/PCN/PCS-Netzen (GSM: Global System for Mobile Communication; PCN: Personal Communication Networks; PCS: Personal Communication System) als die Bitfehlerrate erfassender Meßreport-Parameter der RXQUAL-Parameter selektiert. Es ergibt sich dadurch ein besonders empfindliches Verfahren, da ein relativ genauer Zusammenhang zwischen dem von der Testeinrichtung angebotenen HF-Pegel und dem von dem Mobiltelefon zurückgesendeten Meßreport-Parameter RXQUAL besteht und die RXQUAL-Werte bereits bei geringen Interferenzen eine deutliche Abweichung vom Erwartungswert eines ungestörten Kanals zeigen.

Eine andere Verfahrensvariante mit ausreichender Empfindlichkeit kann darin bestehen, daß als Meßreport-Parameter ein den Empfangspegel erfassender Parameter selektiert wird. In GSM/PCS/PCN-Netzen wird dabei als Meßreport-Parameter der RXLEV-Parameter selektiert, da auch im Falle des RXLEV-Parameters ein Zusammenhang zwischen den von der Testeinrichtung angebotenem HF-Pegel und dem von dem Mobiltelefon zurückgesendeten RXLEV-Wert besteht.

Zur Erfassung temporärer Störungen bzw. Interferenzen, und um die Empfindlichkeit weiter zu erhöhen, werden die zu messenden Kanäle mehrfach abgetastet. Dabei werden beim mehrfachen Abtasten die detektierten Werte des selektierten Meßreport-Parameters kanalweise summiert. Im Falle des RXQUAL-Parameters ergeben die summierten RXQUAL-Werte pro Kanal ein relatives Maß der Feldstärke der Störung, da der numerische Wert des RXQUAL-Parameters mit der Höhe der Störung zunimmt.

Um bei einem Mobiltelefon bei starken Störungen auf einem Kanal nicht die Kontrolle über die Kanalfortschaltung zu verlieren, wird zur Kanalfortschaltung zwischen den zu messenden Kanälen jeweils ein hoher Hochfrequenz-Pegel eingestellt und zum Detektieren des Meßreport-Parameters in den zu messenden Kanälen der Hochfrequenz-Pegel jeweils auf einen niedrigen Pegel abgesenkt. In einer bevorzugten Ausführungsform wird dabei das Detektieren des Meßreport-Parameters bei einem niedrigen Hochfrequenz-Pegel von etwa - 90 dBm durchgeführt. Eine besonders zweckmäßige meßtechnisch relativ einfach realisierbare Ausführungsform des erfindungsgemäßen Verfahrens sieht vor, daß das Einbuchen auf dem untersten Frequenz-Kanal eines Frequenzbands durchgeführt wird. Dabei werden die Kanäle des Frequenzbands mittels einer Meßschleife kanalweise gemessen.

Gemäß einer weiteren bevorzugten Ausführungsform der vorliegenden Erfindung werden die als gestört oder belegt erkannten Kanäle gesperrt. Auf diese Weise kann automatisch eine fehlerhafte Messung des Mobiltelefons vermieden werden. Alternativ oder zusätzlich können bei als gestört oder belegt erkannten Kanälen Warnhinweise angezeigt werden, um die Bedienungsperson der Testeinrichtung darauf aufmerksam zu machen, daß bei diesen Kanälen Meßwertverfälschungen wahrscheinlich sind.

Die in vorrichtungstechnischer Hinsicht gestellte Aufgabe wird dadurch gelöst, daß die Testeinrichtung Mittel zum Ermitteln von gestörten oder belegten Frequenz-Kanälen eines Mobilfunknetzes aufweist.

Ferner sind vorzugsweise Mittel zum Vergleichen des jeweils detektierten Meßreport-Parameters mit einem Schwellenwert und Mittel zum Speichern und Darstellen der in den gemessenen Kanälen detektierten Meßreport-Parameter vorgesehen. Ferner weist die Testeinrichtung Mittel zum Einstellen des HF-Pegels auf, wobei zur Kanalfortschaltung ein höchstmöglicher HF-Pegel einstellbar und zur Detektion des Meßreport-Parameters der HF-Pegel jeweils absenkbar ist. Schließlich weist die Vorrichtung Mittel zum Einstellen aller Kanäle auf.

Indem die Testeinrichtung diese meßtechnischen Mittel umfaßt, lassen sich gestörte oder belegte Kanäle ohne Verwendung eines zusätzlichen Spektrum-Analysators auffinden und anzeigen. Meßwertverfälschungen aufgrund gestörter oder belegter Kanäle, die zu meßtechnischen Artefakten beim Messen von Gerätefunktionen eines Mobiltelefons führen können, lassen sich somit vermeiden.

Weitere bevorzugte Ausgestaltungen der Erfindung sind in den abhängigen Patentansprüchen offenbart.

Weitere Ziele, Merkmale, Vorteile und Anwendungsmöglichkeiten der vorliegenden Erfindung ergeben sich aus der folgenden Beschreibung eines bevorzugten Ausführungsbeispiels. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Ansprüchen oder deren Rückbeziehung. In schematischen Ansichten zeigen:
- Fig. 1: ein Flußdiagramm mit den einzelnen Verfahrensschritten des in einer Testeinrichtung ablaufenden erfindungsgemäßen Meßverfahrens; und
- Fig. 2: eine histogrammartig dargestellte Spektralverteilung gemessener Werte des RXQUAL-Parameters in den einzelnen Frequenzkanälen, wobei die gemessenen Frequenzkanäle auf der Abszissenachse und die jeweils detektierten Parameterwerte auf der Ordinatenachse aufgetragen sind.

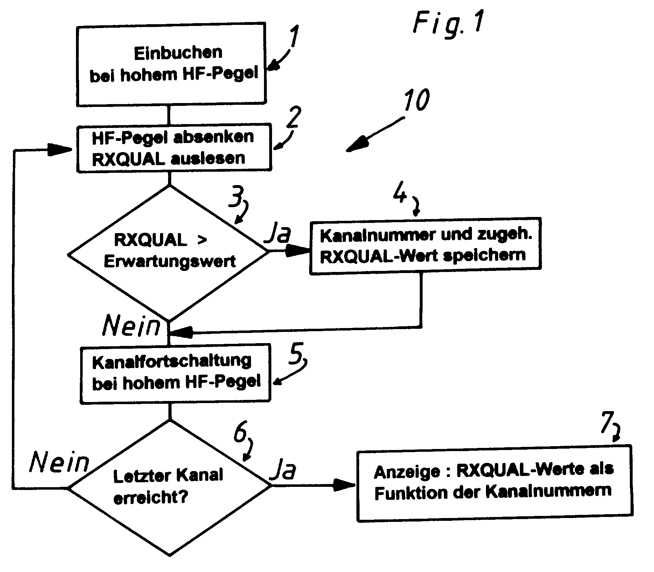

Das in Fig. 1 mit 10 bezeichnete Flußdiagramm veranschaulicht die einzelnen Verfahrensschritte des erfindungsgemäßen Meßverfahrens zur Ermittlung gestörter oder belegter Kanäle eines Mobilfunknetzes, wobei das Meßverfahren in der Testeinrichtung aufgenommen ist. Im Ausführungsbeispiel richtet sich das Meßverfahren und die Testeinrichtung auf GSM/PCN/PCS-Mobilfunknetze (GSM: Global System for Mobile Communication; PCN: Personal Communication Networks; PCS: Personal Communication System).

In einem ersten Verfahrensschritt 1 wird ein zu testendes Mobiltelefon bei hohem Hochfrequenz-HF-Pegel auf der erfindungsgemäßen Testeinrichtung auf dem untersten Frequenzkanal n=1 eingebucht. Nach erfolgtem Einbuchen des Mobiltelefons wird in einem zweiten Verfahrensschritt 2 der HF-Pegel der Testeinrichtung abgesenkt und der RXQUAL-Parameterwert in diesem Kanal ausgelesen. Im Ausführungsbeispiel wird als Resultat meßtechnischer Versuche der HF-Pegel auf -90 dBm abgesenkt; dabei ist dBm definiert als dB milliWatt = 10 log 10 · Leistung {in 1mW / 1mW}.

In einem dritten Verfahrensschritt 3 wird ein Vergleich des detektierten RXQUAL-Parameterwertes mit dem Erwartungswert durchgeführt, wobei als Erwartungswert eine sich bei ungestörtem Betrieb ergebende Mittelwertgröße vorgegeben ist. Ergibt der in Schritt 3 durchgeführte Vergleich, daß eine signifikante Abweichung des in dem Kanal detektierten Parameterwertes von dem vorgegebenen Erwartungswert vorliegt, so wird in einem Speicherschritt 4 die entsprechende Kanalnummer und der zugehörige RXQUAL-Parameterwert gespeichert und zum nächsten Kanal n+1 fortgeschaltet. Ergibt sich in Schritt 3, daß keine Abweichung vorliegt, so wird ebenfalls - in einem Verfahrensschritt 5 - zum nächsten Kanal n+1 bei hohem HF-Pegel fortgeschaltet. Nach erfolgter Kanalfortschaltung wird in einem Verfahrensschritt 6 abgefragt, ob der letzte zu messende Kanal erreicht ist. Ist das Ergebnis der Abfrage negativ (in Fig. 1 mit "Nein" bezeichnet), so wird ein interner Zeiger auf den Verfahrensschritt 2 zurückgesetzt, so daß der Ablauf des Meßverfahrens in diesem Kanal ab dem Verfahrensschritt 2 von neuem beginnt. Ist das Ergebnis der Abfrage jedoch positiv und alle Kanäle des Bandes durchgemessen, so werden in einem letzten Verfahrensschritt 7 die im Speicherungsschritt 4 gespeicherten RXQUAL-Werte als Funktion der Kanalnummem angezeigt.

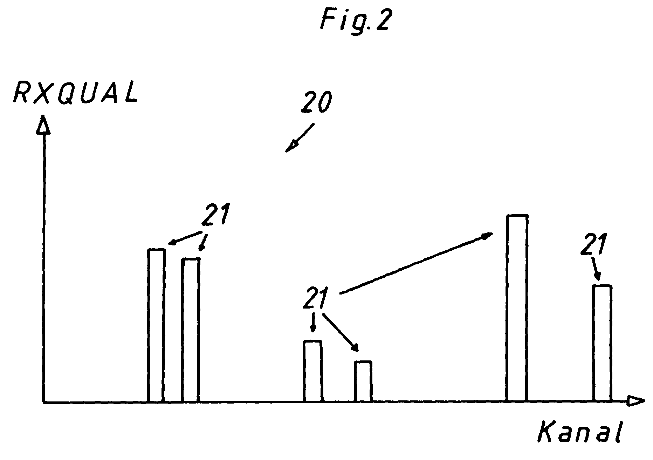

Fig. 2 zeigt qualitativ ein histogrammartige graphische Darstellung 20 der im Verfahrensschritt 7 gespeicherten RXQUAL-Parameterwerte als Funktion der gemessenen Kanäle. Dabei entspricht auf der Ordinatenachse das Null-Niveau dem Erwartungswert. Die in einzelnen Kanälen angezeigten RXQUAL-Werte 21 gehen somit über die im Normalbetrieb zu erwartende Intensität hinaus und bezeichnen somit gestörte oder belegte Kanäle.

Die Testeinrichtung umfaßt Detektionsmittel zur Aufnahme der HF-Meßdaten, Mittel zum Vergleichen der empfangenen Meßdaten mit den jeweiligen Erwartungswerten in den einzelnen Kanälen innerhalb einer die zu messenden Kanäle umfassenden Meßschleife, die vom untersten Kanal eines Frequenzbands startet und bis zum letzten Kanal des Frequenzbands schrittweise durchläuft, sowie Mittel zum Abspeichern und Darstellen der von dem Erwartungswert abweichenden Meßdatenwerte. Zur Erhöhung der Empfindlichkeit kann vorgesehen werden, die einzelnen Kanäle mehrfach abzutasten, wobei die Meßdaten kanalweise aufsummiert werden. Die Testeinrichtung umfaßt außerdem noch Signalerzeugungsmittel zum Senden von Protokollsequenzen.

Ein GSM/PCN/PCS Mobiltelefon wird von einer Mobilfunk-Testeinrichtung nach dem Einbuchen auf die Testeinrichtung mit Kanalzuweisungsprozeduren durch das gesamte Funkband von Kanal n zu Kanal n+1 geschaltet. Dabei werden bei niedrigen HF-Pegeln von etwa - 90 dBm die jeweiligen sogenannten Meßreports des Mobiltelefons ausgewertet. Meßreports sind die kodierten Meldungen der aktuellen Empfangsbedingungen eines Mobiltelefons an die zugehörige Basisstation, im vorliegenden Fall an die Mobilfunk-Testeinrichtung. Es besteht ein relativ genauer Zusammenhang zwischen dem von der Testeinrichtung angebotenen präzisem HF-Pegel und den vom Mobiltelefon zurückgesendeten Meßreports RXLEV und RXQUAL. Jede Abweichung von dem erwarteten RXLEV-Meßwert ist ein Hinweis auf Störungen in dem gemessenen GSM-Kanal. Für eine meßtechnisch auswertbare Veränderung des RXLEV-Wertes muß der lokale Störer mit einem sehr hohen Pegel eintreffen. Eine wesentlich empfindlichere Methode ist die Auswertung der vom Mobiltelefon gemesssenen RXQUAL-Werte, die einen Hinweis auf die aktuellen Bitfehlerraten geben. Diese RXQUAL-Werte zeigen bereits bei geringen Interferenzen eine deutliche Abweichung vom Erwartungswert eines ungestörten Kanals. Der Plot der vom Erwartungswert abweichenden RXQUAL- Werte über die GSM-Kanäle ergibt die örtliche Kanalbelegung und einen Hinweis auf beliebige andere Störquellen innerhalb des GSM-Bandes. Die summierten RXQUAL-Werte pro Kanal ergeben zusätzlich auch ein relatives Maß der Feldstärke des Störers, da der numerische Wert des RXQUAL-Werts mit der Höhe der Störung zunimmt.

Da Sprechkanäle im Gegensatz zu Basisstationen nur zeitweise in Betrieb sein können, ist eine längere Beobachtungszeit auf den einzelnen Kanälen oder ein mehrfacher Durchgang der Kanalfortschaltung mit dem erfindungsgemäßen Verfahren zur Erfassung temperärer Interferenzen vorteilhaft. Um bei einem Mobiltelefon bei starken Störungen auf einem GSM-Kanal nicht die Kontrolle der Kanalfortschaltung zu verlieren, wird diese bei höchstmöglichem HF-Pegel der GSM-Testeinrichtung vorgenommen. Eine temporäre Pegelabsenkung in den Bereich von ca. - 90 dBm ergibt dann einen RXQUAL-Meßreport-Parameter, dessen Wert ein Hinweis für die Größe der möglichen Störungen ist. Da jedes GSM-Mobiltelefon auch bei extrem schlechten Empfangsbedingungen eine Verbindung für mehrere Sekunden hält, kann somit die RXQUAL-Meldung auch unter extremen Störbedingungen ausgelesen werden. Die erneute Kanalfortschaltung erfolgt dann wieder bei maximalem HF-Pegel der GSM-Testeinrichtung, um die sichere Kontrolle des Mobiltelefons durch die Testeinrichtung zu ermöglichen. Die gespeicherten RXQUAL-Werte als Funktion der gemessenen Kanäle können anschließend in einer Liste oder graphisch ausgegeben werden.

Die Erfindung wurde zuvor anhand eines bevorzugten Ausführungsbeispiels näher erläutert. Für einen Fachmann ist es jedoch offensichtlich, daß verschiedene Abwandlungen und Modifikationen gemacht werden können, ohne von dem der Erfindung zugrundeliegenden Gedanken abzuweichen.

## Patentansprüche

1. Verfahren zum Ermitteln von gestörten und/oder belegten Frequenz-Kanälen eines Mobilfunknetzes, bei welchem nach Einbuchen eines Mobiltelefons auf eine Testeinrichtung Meßreport-Parameter zwischen dem Mobiltelefon und der Testeinrichtung in zu messenden Frequenz-Kanälen detektiert und ausgewertet werden, **dadurch gekennzeichnet,** **daß** ein Meßreport-Parameter jeweils kanalweise in den zu messenden Kanälen bei geeignetem Hochfrequenz-HF-Pegel detektiert und in einer Vergleichsprozedur (3) mit einem Schwellwert verglichen wird, wobei bei signifikanter Abweichung des Meßreport-Parameters von dem Schwellwert der gemessene Kanal als gestört oder belegt erkannt wird.

2. Verfahren nach Anspruch 1, **dadurch gekennzeichnet, daß** bei signifikanter Abweichung des Meßreport-Parameters von dem Schwellwert der gemessene Kanal und/oder der detektierte Meßreport-Parameter und/oder dessen Abweichung jeweils gespeichert (4) und/oder als Funktion der jeweils gemessenen Kanäle dargestellt werden.

3. Verfahren nach einem der vorhergehenden Ansprüche, **dadurch gekennzeichnet, daß** für die zu messenden Kanäle ein geeigneter Meßreport-Parameter selektiert wird, wobei vorzugsweise als Schwellwert der Erwartungswert des selektierten Meßreport-Parameters in den jeweiligen Frequenz-Kanälen eingesetzt wird.

4. Verfahren nach einem der vorhergehenden Ansprüche, **dadurch gekennzeichnet, daß** als Meßreport-Parameter ein, die Bitfehlerrate erfassender Parameter selektiert wird, wobei vorzugsweise als der die Bitfehlerrate erfassender Meßreport-Parameter der RXQUAL-Parameter selektiert wird.

5. Verfahren nach einem der vorhergehenden Ansprüche, **dadurch gekennzeichnet, daß** als Meßreport-Parameter ein den Empfangspegel erfassender Parameter selektiert wird., wobei vorzugsweise als der den Empfangspegel erfassender Meßreport-Parameter der RXLEV-Parameter selektiert wird.

6. Verfahren nach einem der vorhergehenden Ansprüche, **dadurch gekennzeichnet, daß** die zu messenden Kanäle mehrfach abgetastet werden, wobei vorzugsweise beim mehrfachen Abtasten die detektierten Werte des selektierten Meßreport-Parameters kanalweise summiert werden.

7. Verfahren nach einem der vorhergehenden Ansprüche, **dadurch gekennzeichnet, daß** zur Kanalfortschaltung zwischen den zu messenden Kanälen jeweils ein hoher Hochfrequenz-Pegel eingestellt und zum Detektieren des Meßreport-Parameters in den zu messenden Kanälen der Hochfrequenz-Pegel jeweils auf einen niedrigen Pegel abgesenkt wird, wobei vorzugsweise das Detektieren des Meßreport-Parameters bei einem niedrigen Hochfrequenz-Pegel von etwa - 90 dBm durchgeführt wird.

8. Verfahren nach einem der vorhergehenden Ansprüche, **dadurch gekennzeichnet, daß** das Einbuchen auf dem untersten Frequenz-Kanal eines Frequenzbands durchgeführt wird, wobei vorzugsweise die Kanäle des Frequenzbands mittels einer Meßschleife kanalweise gemessen werden.

9. Verfahren nach einem der vorhergehenden Ansprüche, **dadurch gekennzeichnet, daß** die als gestört oder belegt erkannten Kanäle gesperrt werden.

10. Verfahren nach einem der vorhergehenden Ansprüche, **dadurch gekennzeichnet, daß** zur Durchführung des Verfahrens ein Mobiltelefon und eine Testeinrichtung dafür verwendet werden.

11. Testeinrichtung zum Testen von Mobiltelefonen zum Betrieb an einem Mobilfunknetz, insbesondere zur Durchführung des Verfahrens nach einem der vorhergehenden Ansprüche, **dadurch gekennzeichnet, daß** die Vorrichtung Mittel zum Ermitteln von gestörten oder belegten Frequenz-Kanälen des Mobilfunknetzes aufweist.

12. Testeinrichtung nach Anspruch 11, **dadurch gekennzeichnet, daß** das Mobilfunknetz derart ausgebildet ist, daß nach Einbuchen eines Mobiltelefons auf die Testeinrichtung Meßreport-Parameter zwischen dem Mobiltelefon und der Testeinrichtung in zu messenden Frequenz-Kanälen detektiert und ausgewertet werden, dadurch gekennzeichnet, daß die Testeinrichtung ferner Mittel aufweist, um einen Meßreport-Parameter jeweils kanalweise in den zu messenden Kanälen bei geeignetem Hochfrequenz-HF-Pegel zu detektieren, und daß die Testeinrichtung Mittel aufweist, um den detektierten Meßreport-Parameter mit einem Schwellenwert zu vergleichen, wobei bei signifikanter Abweichung des Meßreport-Parameters von dem Schwellwert der gemessene Kanal als gestört oder belegt erkannt ist.

13. Verwendung einer Testeinrichtung zum Testen von Mobiltelefonen und eines Mobiltelefones zum Ermitteln von gestörten oder belegten Frequenz-Kanälen des Mobilfunknetzes.
